# EUROPÄISCHE PATENTSCHRIFT

(11) **EP 3 287 297 B1**
(45) Veröffentlichungstag und Bekanntmachung des Hinweises auf die Patenterteilung: **06.10.2021**
(21) Anmeldenummer: 17184190.1
(22) Anmeldetag: 01.08.2017
(51) Int. Cl.: B60B 1/14, B60B 5/02, B60B 21/06

(54) **LAUFRAD FÜR EIN MUSKELBETRIEBENES FAHRZEUG MIT FELGENSEITIG VERKLEBTEN SPEICHEN**
WHEEL FOR A MUSCLE-OPERATED VEHICLE WITH SPOKES BONDED TO THE RIM
ROUE POUR UN VÉHICULE À ENTRAÎNEMENT MUSCULAIRE AYANT DES RAYONS COLLÉS CÔTÉ JANTE

(30) Priorität: 16.08.2016 DE 102016115152
(43) Veröffentlichungstag der Anmeldung: 28.02.2018
(73) Patentinhaber: carbovation gmbh, 88046 Friedrichshafen (DE)
(72) Erfinder: LESCHIK, Thomas, 88046 Friedrichshafen (DE); WISSLER, Erhard, 88046 Friedrichshafen (DE); KÖPPER, Borris, 88046 Friedrichshafen (DE); HÜBNER, Michael, 88046 Friedrichshafen (DE)
(74) Vertreter: Winter, Brandl - Partnerschaft mbB

(56) Entgegenhaltungen:
- EP-A1- 1 985 434
- DE-A1-102007 036 065
- DE-A1-102008 007 722

## Beschreibung

Die Erfindung betrifft ein Laufrad für ein muskelbetriebenes Fahrzeug, vorzugsweise ein Fahrrad, mit einer zumindest teilweise (oder vollständig) aus einem faserverstärktem Verbundmaterial / Faserverbundwerkstoff bestehenden Felge sowie mit mehreren Speichen, die die Felge mit einer Nabe verbinden, wobei jede Speiche mit einem aus einem Faserverbundwerkstoff bestehenden Befestigungsbereich an einem Faserverbundabschnitt einer Außenflanke der Felge adhäsiv angebracht / angeklebt ist und von einer der Außenflanke abgewandten Seite wiederum durch einen der jeweiligen Speiche zugeordneten Abdeckabschnitt, der wiederum an dem Befestigungsbereich sowie der Außenflanke angeklebt ist, abgedeckt ist. Auch betrifft die Erfindung ein Fahrrad mit einem Laufrad.

Gattungsgemäße Felgen sind aus dem Stand der Technik hinlänglich bekannt. So offenbart etwa die DE 10 2007 036 065 A1 ein Rad mit einer Felge, einer Nabe und mindestens einer Vorrichtung zur Verbindung der Felge mit der Nabe, wobei diese Verbindungsvorrichtung eine Speiche umfasst. Die Felge umfasst wiederum eine erste und eine zweite Seitenwand, die einander gegenüber liegen. Eine erste Verbindungsverstärkung erstreckt sich dabei von der ersten Seitenwand zur zweiten. Die erste Verbindungsverstärkung umfasst Fasern, wobei die Speiche die Verstärkung durchquert. Im Weiteren wird ein Druck durch eine Form, innerhalb dessen die einzelnen, die Speichen sowie die Felgen bildenden Lagen eingelegt sind, ausgeübt. Dieser Druck lässt Abschnitte der Schichten und die Enden der Speichen in einen Kern eindringen. Dadurch weisen die Seitenwände eine geometrische Kontinuität auf.

Im Weiteren ist auch gattungsgemäßer Stand der Technik aus der EP 1 985 434 A1 bekannt, worin ein Verfahren zur Herstellung eines Rades sowie ein Rad selbst offenbart ist. Das Rad, insbesondere für ein Fahrrad, umfasst eine Felge, einen Nabenkörper und die Felge und den Nabenkörper verbindende Speichen. Im Wesentlichen besteht es aus einem faserverstärkten Material, wobei die Felge ein Felgenbett, einen Felgenboden und das Felgenbett und den Felgenboden verbindende Felgenflanken umfasst. Wenigstens eine Felgenflanke ist durch einen mehrlagigen und einstückigen Gewebeabschnitt eines Fasergewebe umfassenden Materials gebildet.

Aus dem Stand der Technik hat es sich in einigen Ausführungen als nachteilig herausgestellt, dass zur Erzielung einer ausreichend hohen Festigkeit oft eine unverhältnismäßig hohe Menge an Kleber verwendet wird. Dies bewirkt zwar eine ausreichend hohe Festigkeit hat jedoch wiederum negative Auswirkung auf das Gesamtgewicht sowie die Aerodynamik des Laufrades.

Es ist daher die Aufgabe der vorliegenden Erfindung diese aus dem Stand der Technik bekannten Nachteile zu beheben und insbesondere ein Laufrad zur Verfügung zu stellen, dessen Festigkeits-Gewichtsverhältnis weiter optimiert werden soll.

Dies wird erfindungsgemäß in einem Hauptaspekt der Erfindung dadurch gelöst, dass ein (Größen-/Flächen-)Verhältnis von einer ersten Klebefläche, mit der der Befestigungsbereich (direkt / unmittelbar) an der Außenflanke angebracht / angeklebt ist, zu einer zweiten Klebefläche, mit der der Abdeckabschnitt (direkt / unmittelbar) an der Außenflanke angebracht / angeklebt ist, zwischen 0,1 und 0,4 liegt.

Liegt die erste Klebefläche in ihrer Größe zwischen 10% und 40% zu der Größe der zweiten Klebefläche, werden zum einen besonders hohe Scherspannungen im Betrieb des Laufrades abgestützt, zum anderen das Gewicht der Felge deutlich reduziert.

Weitere vorteilhafte Ausführungsformen sind in den Unteransprüchen beansprucht und nachfolgend näher erläutert.

Liegt das (Größen-/Flächen-)Verhältnis zwischen der ersten Klebefläche und der zweiten Klebefläche zwischen 0,2 und 0,25, wird das Verhältnis zwischen Klebermasse und Festigkeit weiter optimiert.

Weiter optimiert ist dieses Gewichts-Festigkeitsverhältnis, wenn die erste Klebefläche eine Größe zwischen 100 mm² und 300 mm², bevorzugt zwischen 150 mm² und 250 mm², weiter bevorzugt zwischen 180 mm² und 210 mm², besonders bevorzugt um etwa 193 mm², aufweist.

In diesem Zusammenhang ist es auch vorteilhaft, wenn die zweite Klebefläche eine Größe zwischen 400 mm² und 800 mm², bevorzugt zwischen 500 mm² und 700 mm², weiter bevorzugt zwischen 570 mm² und 610 mm², besonders bevorzugt um etwa 590 mm², aufweist. Auch dadurch wird ein noch effektiveres Gewichts-Festigkeitsverhältnis erzielt.

Ist der Abdeckabschnitt ebenfalls aus einem faserverstärkten Verbundmaterial / einem Faserverbundwerkstoff hergestellt, wird das Laufrad noch leichter.

In diesem Zusammenhang ist es desweiteren von Vorteil, wenn der Abdeckabschnitt scheibenartig (sowie vorzugsweise trapezförmig) ausgeformt ist und eine Innenfläche (d.h. eine der Außenflanke zugewandte / an der Außenflanke anliegende Fläche) ausbildet, die gesamtheitlich eine Größe zwischen 600 mm² und 1000 mm², bevorzugt zwischen 700 mm² und 900 mm², weiter bevorzugt zwischen 790 mm² und 830 mm², besonders bevorzugt um etwa 810 mm², aufweist. Dadurch wird wiederum das Gewichts-Festigkeitsverhältnis verbessert.

Liegt der Befestigungsbereich mit seiner ersten Klebefläche flächig in einer Vertiefung in der Außenflanke an, ist wiederum eine besonders geschickte aerodynamische Ausgestaltung des Laufrades umgesetzt.

In diesem Zusammenhang ist es auch zweckmäßig, wenn der Abdeckabschnitt mit seiner zweiten Klebefläche um den gesamten Befestigungsbereich / die erste Klebefläche herum ebenfalls wiederum flächig in der Vertiefung angeordnet ist / anliegt. Auch dies verbessert die Aerodynamik des Laufrades weiter.

Zudem ist es vorteilhaft, wenn die erste Klebefläche und/oder die zweite Klebefläche mit einer Verklebung an der Außenflanke angebracht sind/ist, welche Verklebung eine Dicke zwischen 0,08 mm und 0,22 mm, weiter bevorzugt zwischen 0,09 mm und 0,2 mm, besonders bevorzugt von um die 0,1 mm, aufweist. Dadurch wird das Gewichts-Festigkeitsverhältnis zusätzlich verbessert.

Ist der Faserverbundwerkstoff / das Verbundmaterial des Abdeckabschnittes, des Faserverbundabschnittes der Außenflanke und/oder des Befestigungsbereiches der Speiche so ausgestaltet, dass es eine Vielzahl an Carbonfasern, Glasfasern und/oder Aramidfasern aufweist, wird das Laufrad noch leichter herstellbar.

In diesem Zusammenhang ist es besonders vorteilhaft, wenn der Abdeckabschnitt Verstärkungsfasern in Form eines Gewebes, Gewirks und/oder Geflechts aufweist. Auch ist es von Vorteil, wenn die Außenflanke wiederum durch ein Gewebe, Gewirk oder Geflecht gebildet ist. Diese Gewebe, Gewirke oder Geflechte sind dann wiederum auf typische Weise in einer Kunststoffmatrix, wie einem Harz eingebettet. Somit wird die Felge wiederum gewichtsoptimiert hergestellt.

Zudem ist es dabei zweckdienlich, wenn die Vertiefung in der Außenflanke durch eine in einem Kern der Felge eingearbeitete / eingebrachte Ausnehmung gebildet ist. Denn dadurch kann der Kern bereits vor Aufbringen eines Faserverbundwerkstoff, etwa einer imprägnierten Gewirk- / Geflecht- oder Gewebelage als Faserlage geometrisch für die Ausbildung der Vertiefung vorbereitet werden, wobei der Abdeckabschnitt sowie die Speiche bei der Montage besonders präzise an dem Kern bzw. an der den Kern umgebenden (ersten) Faserlage angebracht werden kann. Somit nimmt der Faserverbundabschnitt in Form einer Faserlage im Bereich der Ausnehmung die Form der Vertiefung an.

In diesem Zusammenhang ist es besonders vorteilhaft, wenn der Kern aus einem Schaumstoffmaterial, etwa einem offenporigen oder einem geschlossenporigen Kunststoffschaummaterial, hergestellt ist. Ist der Kern aus einem Polymethacrylimid (PMI), weiter bevorzugt einem PMI-Hartkunststoff, besonders bevorzugt jedoch aus einem PMI-E-Hartschaumstoff, bestehend / hergestellt, lässt sich die Ausnehmung besonders effektiv einbringen.

Weiterhin ist es zweckmäßig, wenn die Ausnehmung in dem Kern mittels eines Stempels (vorzugsweise eines Heißstempel- / Heißpressverfahrens oder eines Kaltstempel- / Kaltpressverfahrens sowie vorzugsweise vor dem Anbringen der Faserlage) eingearbeitet / eingedrückt / eingeprägt / eingepresst ist. Ist die Ausnehmung weiter bevorzugt mittels eines Heißstempelverfahrens / Heißpressverfahrens ausgebildet, ist der (formstabile / bereits erstarrte / ausgekühlte) Kern nur im Bereich der (beabsichtigten) Ausnehmung (zur Ausbildung dieser) etwas thermisch aufzuschmelzen, wodurch die Ausnehmung einfach reproduzierbar ist. Auch ist es möglich, die Ausnehmung mittels eines Kaltstempelverfahrens einzubringen, wobei dann der Kern lokal plastisch verformt wird. Dadurch ist die Ausnehmung besonders kostengünstig einbringbar.

In weiteren Ausführungen ist die Ausnehmung mittels einer fräsenden Bearbeitung / eines Fräsverfahrens in den (formstabilen / bereits erstarrten / ausgekühlten) Kern eingebracht / eingefräst. Dann ist das die Ausnehmung des Kerns umgebende Material besonders schonend bearbeitet.

Auch ist es möglich, die Ausnehmung bereits beim Urformen des Kerns, vorzugsweise beim Aufschäumen des aus einem Schaumstoffmaterial bestehenden Kerns durch Anordnen einer entsprechenden Negativform an der Kernaußenseite, auszubilden.

Ist die Vertiefung derart ausgebildet, dass die Vertiefung einen ersten Vertiefungsbereich aufweist, der in seiner Dicke und / oder seiner Außenkontur auf den Abdeckabschnitt abgestimmt ist, ist der Abdeckabschnitt noch aerodynamischer in der Felge integriert.

In diesem Zusammenhang ist es auch vorteilhaft, wenn die Vertiefung, neben dem ersten Vertiefungsbereich, einen zweiten Vertiefungsbereich aufweist, der mit seiner Dicke und / oder seiner Außenkontur / seinem Randbereich auf den Befestigungsbereich (der jeweiligen Speiche) abgestimmt ist. Dadurch ist auch die Speichenverklebung innerhalb eines Vertiefungsbereiches angeordnet, wodurch die Aerodynamik weiter verbessert wird.

Zudem ist es von Vorteil, wenn der zweite Vertiefungsbereich tiefer als der erste Vertiefungsbereich ist sowie bzgl. seiner Außenkontur innerhalb der Außenkontur des ersten Vertiefungsbereiches angeordnet ist, wodurch es ermöglicht ist, dass der Abdeckabschnitt unter Anlage in dem ersten Vertiefungsbereich gleichzeitig den Befestigungsbereich / den zweiten Vertiefungsbereich mit abdeckt.

Ist der Abdeckabschnitt mit einem Durchgangsloch, vorzugsweise einem ausgeschnittenen Durchgangloch, ausgebildet, durch das ein an den Befestigungsbereich anschließender Stegbereich der Speiche hindurchragt, ist der Durchgang für die Speiche besonders effektiv an den Querschnitt der ausgehärteten Speiche anpassbar.

Zweckmäßigerweise ist der Befestigungsbereich der Speiche ein aufgefächerter / plattgedrückter Abschnitt eines Faserverbundwerkstoffes eines länglichen Stegbereiches der Speiche. Befestigungsbereich und Stegbereich sind vorteilhafterweise stoffeinteilig / integral miteinander ausgeführt, sodass die Anbindung der jeweiligen Speiche besonders stabil umgesetzt ist.

Weiterhin ist es zweckmäßig, wenn jeder (einzelne) Abdeckabschnitt einer eigenen Vertiefung zugeordnet ist (d.h. je Abdeckabschnitt eine eigene Vertiefung ausgestaltet ist). Somit wird die Aerodynamik des Laufrades weiter optimiert.

In diesem Zusammenhang ist es auch vorteilhaft, wenn der Abdeckabschnitt im ausgehärteten Zustand unmittelbar eine Außenflanke der Felge mit ausbildet, wodurch die Anbringung des Abdeckabschnittes weiter optimiert ist.

Der Abdeckabschnitt ist zur weiteren Verbesserung der Aerodynamik an der die Außenseite mit ausbildenden Oberfläche / Seite strömungsoptimiert oberflächenbehandelt, etwa abgeschliffen.

Die Erfindung betrifft weiterhin ein Fahrrad mit einem erfindungsgemäßen Laufrad nach einem der zuvor beschriebenen Ausführungen.

Die Erfindung wird nun nachfolgend anhand von Figuren näher erläutert, in welchem Zusammenhang verschiedene bevorzugte Ausführungsbeispiele erläutert sind.

Es zeigen:
- Fig. 1: eine isometrische Darstellung eines erfindungsgemäßen Laufrades nach einem bevorzugten ersten Ausführungsbeispiel, wobei besonders gut eine erste Außenflanke des Laufrades zu erkennen ist, entlang welcher sich mehrere Abdeckabschnitte, die jeweils ein Speichenende bedecken, befinden,
- Fig. 2: eine isometrische Darstellung eines Segmentes des Laufrades aus Fig. 1 im Bereich der Felge, wobei die Aufnahme einer ersten sowie einer zweiten Speiche an zwei entlang des Umfangs der Felge beabstandet zueinander angeordneten sowie einander abgewandten Stellen an Außenflanken der Felge mittels Abdeckabschnitten erkennbar ist,
- Fig. 3: eine isometrische Detailansicht des Laufrades aus Fig. 1 an einem Anbindungsbereich zwischen Speiche und Felge, wobei ein Durchgangsloch in dem Abdeckabschnitt, das durch die Speiche durchdrungen ist, zu erkennen ist,
- Fig. 4: eine isometrische Detailansicht des Laufrades aus Fig. 1 im Anbindungsbereich zwischen Speiche und Felge, wobei die Felge seitlich versetzt zu dem Abdeckabschnitt geschnitten ist, sodass der Querschnitt der Felge gut erkennbar ist,
- Fig. 5: eine isometrische Detailansicht einer für die Anbringung der Speiche sowie des Abdeckabschnittes vorbereiteten Bereiches einer Außenflanke der Felge, wie sie in dem des Laufrad nach den Fig. 1 bis 4 eingesetzt ist, wobei die Form einer Vertiefung erkennbar ist, in die ein Befestigungsbereich der Speiche und der Abdeckabschnitt eingesetzt werden,
- Fig. 6: eine isometrische Detailansicht der Felge aus Fig. 5, wobei diese nun im Bereich der Vertiefung geschnitten dargestellt ist, sodass die die Form der Vertiefung vorgebende Ausnehmung in einem Kern der Felge erkennbar ist,
- Fig. 7: eine isometrische Detailansicht des fertig montierten Laufrades gemäß Fign. 1 bis 4 im Anbindungsbereich zwischen Speiche und Felge, wobei der Abdeckabschnitt transparent dargestellt ist,
- Fig. 8: eine isometrische Darstellung einer in dem Laufrad der Fig. 7 eingesetzten Speiche, in der eine (erste) Klebefläche des Befestigungsbereiches markiert ist,
- Fig. 9: eine isometrische Darstellung des für die Anbringung der Speiche sowie des Abdeckabschnittes vorbereiteten Stelle an der Außenflanke der Felge, ähnlich zu Fig. 5, wobei ein Vertiefungsgrund, in den der Befestigungsbereich mit seiner (ersten) Kontaktfläche vollständig verbunden wird, markiert ist,
- Fig. 10: eine isometrische Darstellung des für die Anbringung der Speiche sowie des Abdeckabschnittes vorbereiteten Stelle an der Außenflanke der Felge, ähnlich zu Fig. 9, wobei nun ein Vertiefungsgrund, an dem der Abdeckabschnitt flächig angeklebt ist, markiert ist,
- Fig. 11: eine isometrische Darstellung des Abdeckabschnittes, wie er in dem Laufrad der Fign. 1 bis 4 sowie 7 eingesetzt ist, von einer Innenseite, d.h. einer mit dem Befestigungsbereich sowie der Außenflanke der Felge verklebten Seite,
- Fig. 12: eine detaillierte Seitendarstellung des Laufrades nach Fig. 1 im Anbindungsbereich zwischen Speiche und Felge, wobei der Abdeckabschnitt transparent dargestellt ist und insbesondere die Abmaße des Abdeckabschnittes, des Befestigungsbereichs sowie die Vertiefung dargestellt sind,
- Fig. 13: eine isometrische Darstellung des in Querrichtung geschnittenen Laufrades nach Fig. 1 im Bereich des Anbindungsbereiches der Speiche an der Felge, sodass besonders gut die Anbringung des Befestigungsbereiches der Speiche zwischen dem Abdeckabschnitt und der Außenflanke der Felge zu erkennen ist,
- Fig. 14: eine isometrische Darstellung eines in Querrichtung geschnittenen Laufrades nach einem zweiten Ausführungsbeispiel, entsprechend einem ersten Nebenaspekt der Erfindung, wobei eine Felge samt einer an ihr angebrachten Speiche des Laufrades geschnitten dargestellt sind, sodass eine Anbringung der Speiche über zwei Verbindungsabschnitte an der Felge verdeutlicht ist,
- Fig. 15: eine schematische Vorderansicht des Laufrades nach dem ersten Ausführungsbeispiel, wobei ein radiales Auseinandertreiben mehrerer Speichen beim Herstellen des Laufrades gemäß eines Herstellverfahrens eines zweiten Nebenaspektes veranschaulicht ist, und
- Fig. 16: eine Längsschnittdarstellung des Laufrades nach Fig. 15, wobei zwei zum axialen und radialen Auseinandertreiben der Speichen verwendete Spannkörper gut erkennbar sind.

Die Figuren sind lediglich schematischer Natur und dienen ausschließlich dem Verständnis der Erfindung. Die gleichen Elemente sind mit denselben Bezugszeichen versehen. Auch sind die einzelnen Merkmale der verschiedenen Ausführungsbeispiele frei miteinander kombinierbar.

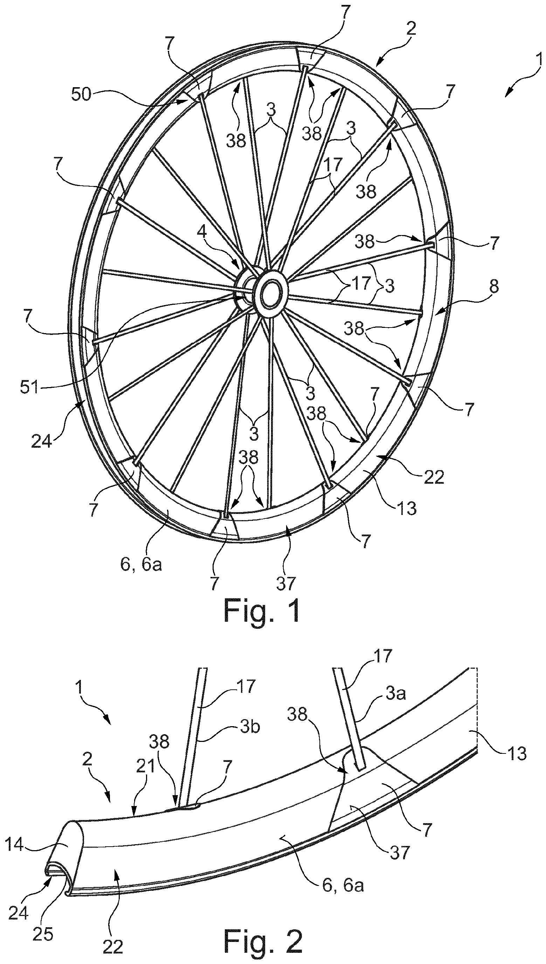

In Fig. 1 ist ein erfindungsgemäßes Laufrad 1 nach einem vorteilhaften Ausführungsbeispiel zu erkennen. Das Laufrad 1 dient auf übliche Weise als ein Laufrad 1 eines Fahrrades, welches hier der Übersichtlichkeit halber nicht weiter dargestellt ist. Das Laufrad 1 dient somit zum Einsatz in einem muskelbetriebenen Fahrzeug.

Das Laufrad 1 weist eine Nabe 4 auf, mit der es im Betrieb an einem fahrzeugfesten / rahmenfesten Abschnitt des muskelbetriebenen Fahrzeuges drehbar gelagert ist. Von dieser Nabe 4 aus erstrecken sich mehrere Speichen 3 in radialer Richtung des Laufrades 1 (d.h. in Bezug auf eine durch die Nabe 4 gebildete Drehachse radial) nach außen. Die Nabe 4 ist zentrisch zu einer Felge 2 des Laufrades 1 angeordnet und durch die Speichen 3 mit dieser verbunden. Als Felge 2 ist, wie üblich, jener Bereich des Laufrades 1 bezeichnet, der ringförmig ausgebildet ist und ein Ende 38 der Speichen 3 aufnimmt.

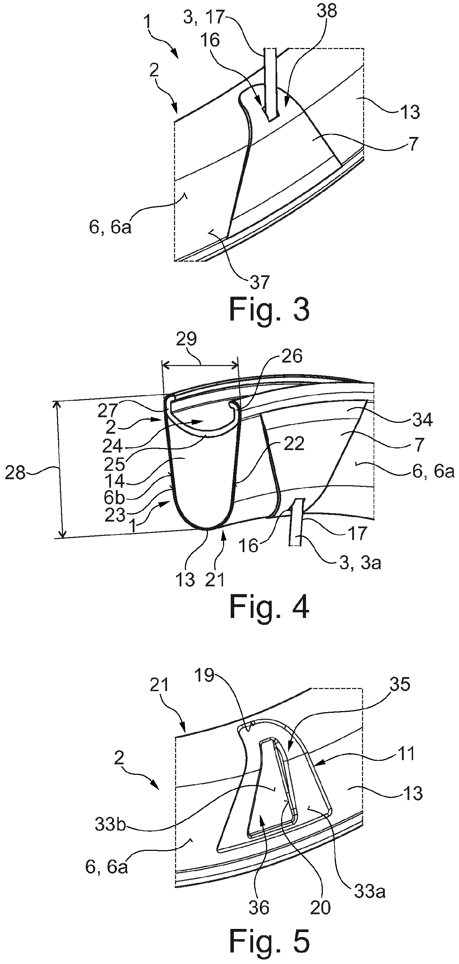

In Fig. 4 sind die Form sowie der Aufbau der in Fig. 1 eingesetzten Felge 2 detailliert zu erkennen. Die Felge 2 besteht teilweise aus einem Faserverbundwerkstoff / faserverstärkten Verbundmaterial. Insbesondere weist die Felge 2 eine aus Faserverbundwerkstoff gebildete Faserlage 13 auf.

Die Faserlage 13 umgibt einen Kern 14 der Felge 2 in einem Bereich eines Felgenbodens 21 sowie seiner Seitenflanken 22 und 23. Die Form des Kerns 14, der aus einem geschlossenporigen, alternativ hierzu jedoch auch aus einem offenporigen Kunststoffschaummaterial, gebildet ist, gibt die Außenform der Felge 2 vor. Insbesondere gibt dieser Kern 14 die abgerundete Form des auf einer radialen Innenseite angeordneten Felgenbodens 21 sowie die Form der sich von dem Felgenboden 21 aus radial nach außen (im Wesentlichen V-förmig zueinander) erstreckenden Außenflanken 6 der Felge 2 vor. Im Weiteren gibt der Kern 14 die Form eines radial außen angeordneten Felgenbettes 24 der Felge 2 vor. Das Felgenbett 24 wird nach radial außen durch eine Felgenbettverstärkung 25 ausgeformt, die direkt auf dem Kern 14 aufliegt. Die Felgenbettverstärkung 25 ist vorzugsweise ebenfalls aus einem Faserverbundwerkstoff ausgebildet. Die Felgenbettverstärkung 25 ist im Wesentlichen U-förmig ausgebildet und erstreckt sich in radialer Richtung der Felge 2, unter Ausbildung zweier Felgenhörner 26, 27, von dem Kern 14 aus weg.

Die Faserlage 13 weist zumindest eine auf den Kern 14 aufgeflochtene Verstärkungsfaserschicht auf, wobei die Faserlage 13 in weiteren Ausführungen alternativ oder zusätzlich auch einen Gewebestreifen aufweist, der um den Kern 14 herumgelegt ist. Die Faserlage 13 ist so um den Kern 14 herum angeordnet, dass sie seitlich der Felgenbettverstärkung 25 an den Felgenhörnern 26, 27 anliegt. Die Faserlage 13 ist in einem ausgehärteten Zustand der Felge 2 sowohl mit dem Kern 14 als auch mit der Felgenbettverstärkung 25 fest verbunden.

Wie weiterhin in Fig. 4 zu erkennen, wird eine Felgenhöhe 28 der Felge 2 durch den radialen Abstand zwischen einer radialen Innenseite des Felgenbodens 21, sowie einer radialen Außenseite der Felge 2, die der radialen Außenseite der auf einer gleichen radialen Höhe angeordneten Felgenhörner 26, 27 entspricht, definiert. Eine Felgenbreite ist, ebenfalls in Fig. 4 erkennbar, durch einen Abstand der beiden einander abgewandten Außenseiten der Felgenhörner 26, 27, d.h. einem maximalen axialen Abstand in Bezug auf die Drehachse des Laufrades 1 zwischen den einander abgewandten Seiten der Faserlage 13 / den Außenflanken 6a, 6b, im Bereich der Felgenhörner 26, 27, definiert. Besonders vorteilhaft ist die Felgenhöhe 28 zwischen 38 mm und 42 mm, weiter bevorzugt mit ca. 40 mm, ausgebildet. Die Felgenbreite 29 ist zudem bevorzugt zwischen 20 mm und 28 mm, besonders bevorzugt mit ca. 24 mm ausgestaltet.

In diesem Zusammenhang ist es jedoch auch in einem weiteren Ausführungsbeispiel des erfindungsgemäßen Laufrades 1 vorteilhaft, die Felgenhöhe 28 anders zu wählen, etwa zwischen 30 mm und 34 mm, besonders bevorzugt mit ca. 32 mm auszubilden, oder wiederum in einem weiteren Ausführungsbeispiel die Felgenhöhe 28 mit einem Wert zwischen 34 mm und 38 mm, besonders bevorzugt mit ca. 36 mm, auszubilden.

Fig. 2 zeigt eine detaillierte Ansicht eines Abschnittes der Felge 2 nach Fig. 1, wobei zwei einzelne, in Umfangsrichtung der Felge 2 aufeinander folgende / benachbart zueinander angeordnete Speichen 3 (erste Speiche 3a sowie zweite Speiche 3b) veranschaulicht sind. Jeder Speiche 3; 3a, 3b ist ein separater, nachfolgend näher beschriebener Abdeckabschnitt 7 zugeordnet. Auch wird nochmals erkennbar, dass jeweils zwei in Umfangsrichtung aufeinander folgende Speichen 3 auf unterschiedlichen Außenflanken 6 der Felge 2 angebracht sind. D.h., in Umfangsrichtung der Felge 2 betrachtet, sind die jeweiligen, an gegenüberliegenden Außenflanken 6a und 6b angebrachten Speichen 3 versetzt / beabstandet zueinander angeordnet.

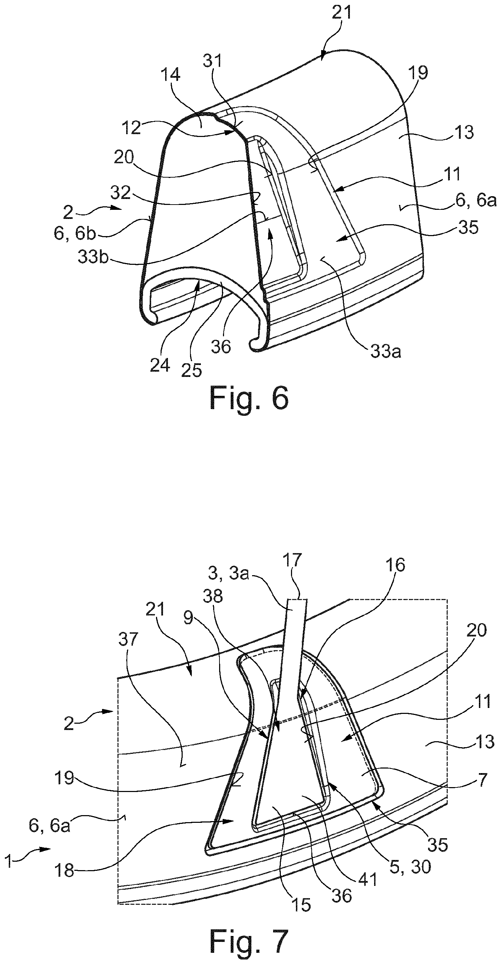

Die jeweilige Anbringung der Speichen 3 an der Felge 2 ist gleich ausgestaltet. In Fig. 7 ist die Befestigung eines Befestigungsbereiches 5 der ersten Speiche 3a an der Felge 2 exemplarisch für die übrigen Speichen 3 des Laufrades 1 veranschaulicht. An dem der Felge 2 zugewandten Ende 38 der ersten Speiche 3a ist der Befestigungsbereich 5 ausgebildet. Dieser Befestigungsbereich 5 ist als stoffeinteiliger Bestandteil der vollständig aus Faserverbundwerkstoff bestehenden ersten Speiche 3a ausgeführt.

Die erste Speiche 3a weist einen Abschnitt mit einem im Wesentlichen entlang einer Längsachse gleichbleibenden Querschnitt auf, welcher Abschnitt gleichen Querschnittes als Stegbereich 17 bezeichnet ist. Die erste Speiche 3a erstreckt sich von einem an der Nabe 4 befestigten (zweiten) Ende aus über diesen Stegbereich 17 bis zu dem an der Felge 2 befestigten (ersten) Ende 38 hin.

Der Befestigungsbereich 5 ist stoffeinteilig mit dem Stegbereich 17 verbundener Faserverbundwerkstoffabschnitt 30, der relativ zu dem Stegbereich 17 aufgefächert / verbreitert / platt gedrückt ist und im Wesentlichen deltaförmig ausgebildet ist. Die erste Speiche 3a weist somit an ihrem Befestigungsbereich 5 eine geringere Dicke, jedoch eine erhöhte Breite als am Stegbereich 17 auf.

Auch verjüngt sich der Befestigungsbereich 5 zu seinem distalen Ende hin, d.h. weg von dem Stegbereich 17, kontinuierlich.

Zur Aufnahme des aufgefächerten Faserverbundwerkstoffabschnittes 30 / Befestigungsbereiches 5 ist in der Felge 2, nämlich in dem Vorzusammenbau aus Kern 14 und Faserlage 13, eine Vertiefung 11 ausgebildet. Diese Vertiefung 11 ist, wie in Fig. 6 zu erkennen, indirekt durch die Ausbildung einer Ausnehmung 12 in dem Kern 14 vorgegeben. Die Ausnehmung 12 weist wiederum zwei Ausnehmungsbereiche 31 und 32 auf. Der erste Ausnehmungsbereich 31 erstreckt sich exemplarisch für die erste Speiche 3a an einem lokalen Umfangsbereich des ringförmigen Kerns 14 von dem Felgenboden 21 aus entlang der ersten Seitenflanke 22 des Kerns 14 mit einer im Wesentlichen gleichbleibenden Tiefe. Dieser erste Ausnehmungsbereich 31 ist, wie nachfolgend näher erläutert, in seiner Tiefe auf die Dicke eines Abdeckabschnittes 7 und mit seiner Außenkontur auf die Außenkontur des Abdeckabschnittes 7 bereits abgestimmt.

Innerhalb dieses ersten Ausnehmungsbereiches 31, der sich im Wesentlichen trapezförmig / prismenförmig von der den Felgenboden 21 ausbildenden Seite aus radial nach außen zur ersten Seitenflanke 22 hin verbreitert, ist mittig ein sich ebenfalls in radialer Richtung erstreckender zweiter Ausnehmungsbereich 32 angebracht. Dieser zweite Ausnehmungsbereich 32 ist mittig innerhalb einer Außenkontur / eines Randbereiches des ersten Ausnehmungsbereiches 31 platziert / gebildet. Der zweite Ausnehmungsbereich 32 weist eine größere Tiefe als der erste Ausnehmungsbereich 31 auf, wodurch der zweite Ausnehmungsbereich 32 gegenüber dem ersten Ausnehmungsbereich 31 abgesetzt ist.

Die Faserlage 13 liegt, wie wiederum in den Fign. 5 und 6 zu erkennen, derart an dem Kern 14 an, dass sie die Form sowie Konturen der Ausnehmung 12, insbesondere der beiden Ausnehmungsbereiche 31, 32, nachformt / nachbildet. Somit bildet die Faserlage 13, wie in Fig. 6 gut zu erkennen ist, die Vertiefung 11 aus, die die gleiche Form aufweist wie die Ausnehmung 12 des Kerns 14, nun jedoch in ihren Maßen um die Lagendicke der Faserlage 13 verringert ist.

Ein erster Vertiefungsbereich 35 mit einer ersten Außenkontur 19, der an den ersten Ausnehmungsbereich 31 angeformt ist, bildet zusammen mit einem zweiten Vertiefungsbereich 36, der an den zweiten Ausnehmungsbereich 32 angeformt ist, und eine zweite Außenkontur 20 ausbildet, die Vertiefung 11 aus. Der erste Vertiefungsbereich 35 ist derart ausgebildet, dass seine Tiefe im Wesentlichen der Dicke des Abdeckabschnittes 7 entspricht. Wiederum ist die Tiefe des zweiten Vertiefungsbereiches 36 auf die Dickenverhältnisse des Befestigungsbereiches 5 der ersten Speiche 3a abgestimmt, so dass der Befestigungsbereich 5 den zweiten Ausnehmungsbereich 32 vorzugsweise nach außen hin nicht oder kaum überragt. Zu diesem Zwecke weist der zweite Vertiefungsbereich 36 eine sich variierende Tiefe auf, die von einem radial inneren Bereich zu einem radial äußeren Bereich abnimmt. Dadurch nimmt der zweite Vertiefungsbereich 36 eine komplementär zu dem Befestigungsbereich 5 ausgeführte Form an (da sich der Befestigungsbereich 5 ebenfalls in radialer Richtung des Laufrades 1 gesehen nach außen hin in seiner Dicke verringert). Ein (zweiter) Vertiefungsgrund 33b des zweiten Vertiefungsbereiches 36 erstreckt sich entlang einer gedachten Erstreckungsebene.

Der zweite Vertiefungsbereich 36 ist derart relativ zu dem ersten Vertiefungsbereich 35 angeordnet, dass der zweite Vertiefungsbereich 36 mit seiner (zweiten) Außenkontur 20 vollständig von der (ersten) Außenkontur 19 des ersten Vertiefungsbereiches 35 umgeben ist.

Wie bereits in Fig. 1 zu erkennen, ist jede Speiche 3 des Laufrades 1 im Bereich ihres Befestigungsbereiches 5 zusätzlich mit einem Abdeckabschnitt 7 versehen / abgedeckt. Dieser Abdeckabschnitt 7 ist aus einem Faserverbundwerkstoff gebildet. Der Abdeckabschnitt 7 stellt einen vor Befestigung an der Felge 2 eigenständigen, separat hergestellten Faserlagenabschnitt dar. In dieser Ausführung bestehen mehrere, in dem faserverstärkten Verbundmaterial enthaltene, Verstärkungsfasern aus einem Kohlenstoffmaterial / aus Carbon, in weiteren Ausführungen sind jedoch auch andere Materialien für solche Verstärkungsfasern umgesetzt, bspw. Aramid- oder Glasfasern. Auch eine Kombination dieser verschiedenen Fasern ist in einer weiteren Ausführung ausgeführt.

Die Verstärkungsfasern des Abdeckabschnittes 7 liegen als Gewebe, alternativ jedoch auch als Gewirk oder Geflecht, vor.

Wie weiterhin in Fig. 3 zu erkennen, weist der Abdeckabschnitt 7 einen im Wesentlichen trapezförmigen / prismenförmigen Anlagebereich 18 auf, der an seinem der ersten Außenkontur 19 zugewandten Randbereich flächig innerhalb des ersten Vertiefungsbereichs 35 anliegt. Der Abdeckabschnitt 7 ist in einem befestigten Zustand der ersten Speiche 3a formlich an die Außenflanke 6 der Felge 2, hier die erste Außenflanke 6a, angepasst.

In Fign. 3 und 4 ist zu erkennen, dass der erste Vertiefungsbereich 35 nicht exakt mit seiner Dicke / Tiefe auf die Dicke des Abdeckabschnittes 7 abgestimmt ist. Der Abdeckabschnitt 7 überragt den ersten Vertiefungsbereich 35 um ein gewisses Maß nach außen hin. Alternativ hierzu ist es in weiteren Ausführungen jedoch auch umgesetzt, dass der Abdeckabschnitt 7 bündig mit dem an die Vertiefung 11 bzw. an die erste Außenkontur 19 angrenzenden Bereich der Felge 2 (im Bereich der jeweiligen Außenflanke 6a, 6b sowie des Felgenbodens 21) ausgebildet ist.

Der Abdeckabschnitt 7 ist stets so angeordnet und ausgebildet, dass er eine Außenseite 37 des Laufrades 1 im befestigten Zustand unmittelbar mit ausbildet. Der dann im ausgehärteten / fertig montierten Zustand des Laufrades 1 einen Verbindungsbereich 15 ausbildende Befestigungsbereich 5 ist zusammen mit dem Abdeckabschnitt 7 auf die Faserlage 13 aufgeklebt. Der Abdeckabschnitt 7 liegt flächig um den zweiten Vertiefungsbereich 36 herum an der Faserlage 13 / der Außenflanke 6; 6a an.

Wie in Fig. 3 weiterhin zu erkennen, weist der Abdeckabschnitt 7 zur Durchführung der Speiche 3a, ein Durchgangsloch 16 auf, durch das der Stegbereich 17 im montierten Zustand des Laufrades 1 hindurchragt. Dieses Durchgangsloch 16 ist in dieser Ausführungsform im Wesentlichen rechteckförmig, nämlich quadratisch aus dem Abdeckabschnitt 7 ausgeschnitten. Dies ermöglicht zum einen eine besonders aerodynamische Durchführung des Stegbereiches 17 / der ersten Speiche 3a, und zugleich, dass sich bei einem Durchführen der Speiche 3a die um das Durchgangsloch 16 befindlichen Verstärkungsfasern des Abdeckabschnittes 7 nicht ungewollt verformen / aufwellen.

Radial außerhalb des Abdeckabschnittes 7, nämlich im Anschluss an den Anlagebereich 18, ist auf der Außenseite 37 der Felge 2 / des Laufrades 1 (je Außenflanke 6a, 6b) noch eine Bremsenauflage 34 ausgebildet, die eine Struktur aufweist, die für das Bremsen optimiert ist. Die Dicke dieser Bremsenauflage 34 nimmt hin zu den Felgenhörnern 26, 27 ab.

Zurückkommend auf Fig. 7 sei weiterhin erwähnt, dass der Befestigungsbereich 5 an der Außenflanke 6; 6a der Felge 2 angeklebt ist. Insbesondere ist der Befestigungsbereich an dem einen Faserverbundabschnitt / Faserverbundbereich ausbildenden Bereich der Faserlage 13 adhäsiv angebracht. Der Befestigungsbereich 5 ist zu einer der Außenflanke 6; 6a der Felge 2 abgewandten Seite durch den der Speiche 3; 3a zugeordneten Abdeckabschnitt 7 abgedeckt. Auch der Abdeckabschnitt 7 ist zu diesem Zwecke an der Außenflanke 6; 6a angeklebt. Gleichzeitig ist der Abdeckabschnitt 7 mit seiner an dem Befestigungsbereich 5 unmittelbar anliegenden Fläche an diesem angeklebt.

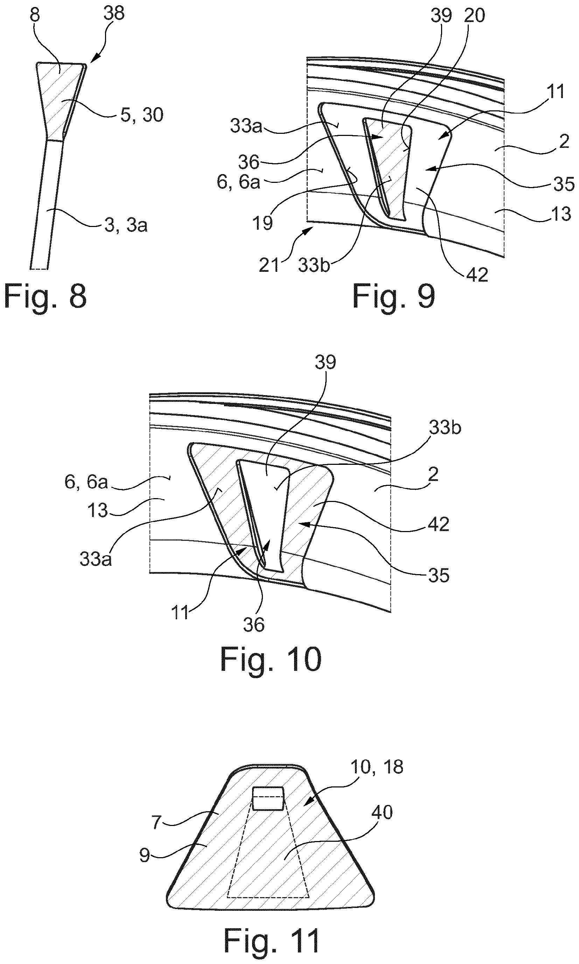

In den Fign. 8 bis 11 sind die einzelnen Klebeflächen der verschiedenen Bestandteile dargestellt.

In Fig. 8 ist eine erste Klebefläche 8 an dem Befestigungsbereich 5 dargestellt, die aufgrund der aufgefächerten Ausprägung des Befestigungsbereiches 5 trapezförmig ist. Komplementär zu dieser ersten Klebefläche 8 ist eine weitere (dritte) Klebefläche 39 an dem zweiten Vertiefungsgrund 33b / dem zweiten Vertiefungsbereich 36 ausgebildet. In der montierten Stellung des Laufrades gemäß Fig. 7 ist die erste Klebefläche 8 flächig an der dritten Klebefläche 39 angeklebt.

Wiederum ist in Fig. 11 eine Innenfläche 10 des Abdeckabschnittes 7 dargestellt, die wiederum den Anlagebereich 18 ausbildet. Diese Innenfläche 10 gemäß Schraffierung in Fig. 11 dient gesamtheitlich als (Gesamt-)Klebefläche. Dabei ist diese Innenfläche 10 wiederum in eine (zweite) Klebefläche 9 sowie eine (vierte) Klebefläche 40 aufgeteilt. Die vierte Klebefläche 40 ist wiederum komplementär zu der dem Abdeckabschnitt 7 zugewandten Fläche des Befestigungsbereichs 5 ausgeformt. Somit ist auch diese vierte Klebefläche 40 wiederum trapezförmig. Die vierte Klebefläche 40 entspricht in der Größe der ersten Klebefläche 8. Die vierte Klebefläche 40 ist im zusammengebauten Zustand nach Fig. 7 flächig an dem Befestigungsbereich 6, nämlich einer (fünften) Klebefläche 41, wie sie in Fig. 7 unterhalb des Abdeckabschnittes 7 erkennbar ist, angeklebt. Eine die vierte Klebefläche 40 umgebende (zweite) Klebefläche 9 des Abdeckabschnittes klebt wiederum an der in Fig. 10 hervorgehobenen (sechsten) Klebefläche 42 der Außenflanke 6a. Die sechste Klebefläche 42 liegt an einem ersten Vertiefungsgrund 33a des ersten Vertiefungsbereiches 35 flächig an.

Erfindungsgemäß ist das Größenverhältnis von der ersten Klebefläche 8, mit der der Befestigungsbereich 5 an der Außenflanke 6; 6a / dem zweiten Vertiefungsbereich 36 angebracht ist, zu der zweiten Klebefläche 9, mit der der Abdeckabschnitt 7 an der Außenflanke 6; 6a / dem ersten Vertiefungsbereich 35 angebracht ist, zwischen 0,1 / 10 % und 0,4 / 40 %. Insbesondere ist in diesem Ausführungsbeispiel dieses Verhältnis bei ca. 23 %. Besonders bevorzugt sind die erste Klebefläche 8 und somit auch die dritte Klebefläche 39 jeweils 193 mm² groß. Daher beträgt dann auch die an dem Abdeckabschnitt 7 im Betrieb angeklebte fünfte Klebefläche 41 des Befestigungsbereichs 6 193 mm². Die zweite Klebefläche 9 entspricht wiederum in der Größe der sechsten Klebefläche 42 und beträgt besonders bevorzugt 590 mm². Die gesamte Innenfläche 10 des Abdeckabschnittes 7 beträgt besonders bevorzugt 810 mm².

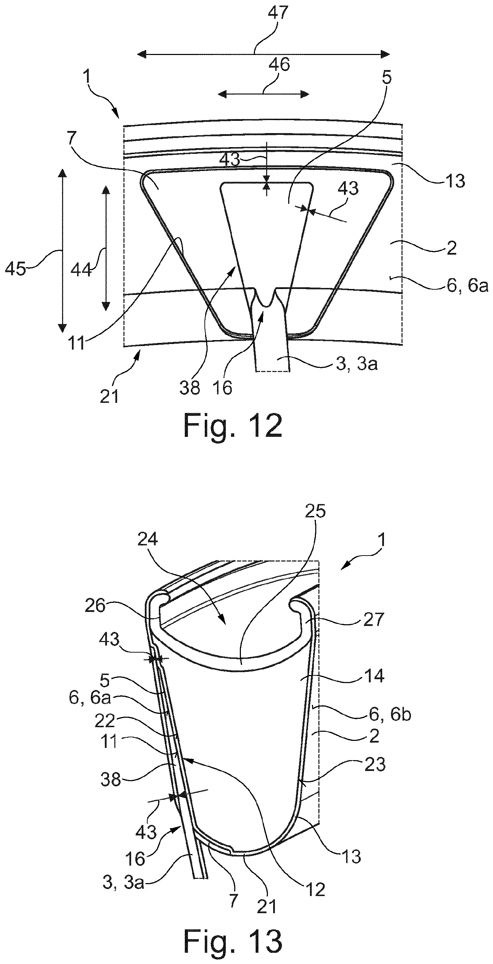

Die Verklebungsdicken, d.h. die Dicken der zwischen den aneinander anliegenden Klebeflächen gebildeten Verklebungen, sind dann nochmals in Fig. 13 besonders gut erkennbar. Hierbei ist zwischen dem Befestigungsbereich 5 (der ersten Klebefläche 8) und dem Abdeckabschnitt 7 (der vierten Klebefläche 40) eine Klebeschichtdicke 43 von ca. 0,1 mm (+/- 0,1 mm) vorhanden. Zwischen dem Abdeckabschnitt 7 (zweite Klebefläche 9) und der Außenflanke 6; 6a / dem ersten Vertiefungsbereich 35 (sechste Klebefläche 42) ist eine Klebeschichtdicke 43 zwischen 0,1 mm und 0,2 mm vorhanden.

Wiederum ist in Fig. 12 zu erkennen, dass die Klebeschichtdicke 43 zwischen dem Randbereich des Befestigungsbereiches 5 und dem zweiten Vertiefungsbereich 36 / der zweiten Außenkontur 20 ca. 0,1 mm.

Desweiteren ist in Fig. 12 die Abmessung des Abdeckabschnittes 7 sowie des Befestigungsbereiches 5 erkennbar. Eine in radialer Richtung gemessene Erstreckung / Länge 44 des Befestigungsbereiches 5 beträgt vorzugsweise um die 22 mm. Eine in radialer Richtung gemessene Erstreckung / Länge 45 des ersten Vertiefungsbereiches 35 / des Abdeckabschnittes 7 beträgt um die 28 mm. Eine Erstreckung des Befestigungsbereiches 5 in Umfangsrichtung der Felge 2 / eine Breite 46 des Befestigungsbereiches 5 beträgt um die 15 mm. Eine Erstreckung des ersten Vertiefungsbereiches 35 / des Abdeckabschnittes 7 in Umfangsrichtung der Felge 2 / eine Breite des ersten Vertiefungsbereiches 35 beträgt um die 42 mm.

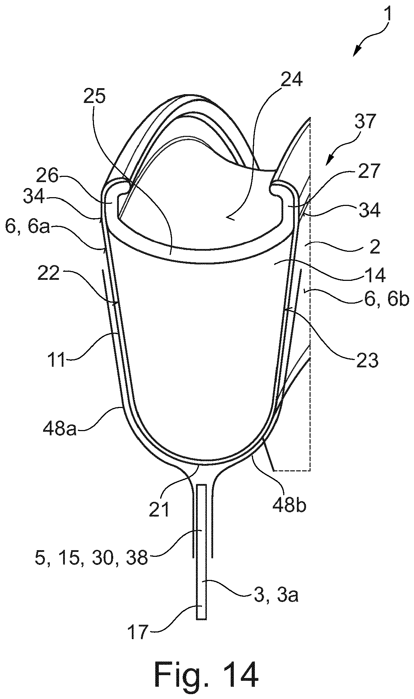

In Verbindung mit Fig. 14 ist ein erster Nebenaspekt der Erfindung in Form einer weiteren Ausführung eines Laufrades 1 dargestellt. Dieses Laufrad 1 ist grundsätzlich wie das in Bezug auf Fig. 1 beschriebene Laufrad 1 ausgestaltet. Folglich weist auch das Laufrad 1 gemäß Fig. 14 eine hier der Übersichtlichkeit halber nicht weiter dargestellte Nabe 4 sowie eine Vielzahl an, in Umfangsrichtung verteilt angeordneten, Speichen 3 auf. Von den Speichen ist hier der Übersichtlichkeit halber lediglich eine (erste) Speiche 3a dargestellt.

Auch in dieser Ausführung gemäß dem ersten Nebenaspekt sind die jeweiligen Speichen 3 mit einem (zweiten) Ende an der Nabe 4 befestigt. Über den im Querschnitt gleichbleibenden Stegbereich 17 ist das zweite Ende mit dem ersten Ende 38 verbunden, das mit der Felge 2 weiter verbunden ist. Die jeweiligen Speichen 3 sind ist im Gegensatz zu der Fig. 1 nicht direkt / unmittelbar an der Felge 2 angeklebt, sondern indirekt / mittelbar mit der Felge 2 verbunden / an dieser befestigt.

Der Querschnitt der Felge 2 sowie deren weiterer Aufbau entsprechen im Wesentlichen der Ausführung gemäß dem Ausführungsbeispiel nach den Fig. 1 bis 13. In Fig. 14 ist der Kern 14 ohne Ausnehmung 12 und somit sind auch die Außenflanken 6a und 6b wiederum ohne Vertiefung 11 ausgestaltet. In weiteren Ausführungen ist es jedoch auch möglich, wiederum diese Ausnehmung 12 im Kern 14 bzw. die Vertiefung 11 je Speiche 3 in den Außenflanken 6a, 6b vorzusehen.

Die Speiche 3a, repräsentativ für die übrigen weiteren Speichen 3 des Laufrades 1, ist in Fig. 14 über zwei Verbindungsabschnitte 48a und 48b mit der Felge 2 verbunden. Die Verbindungsabschnitte 48a und 48b weisen bevorzugt eine ähnliche, d. h. ebenfalls trapezförmige, Form wie der jeweilige Abdeckabschnitt 7 auf. Folglich sind auch die Verbindungsabschnitte 48a und 48b aus einem Faserverbundwerkstoff ausgeformt und weisen einen Gewebeabschnitt auf. Alternativ ist es jedoch auch möglich, den Gewebeabschnitt als Geflecht- oder Gewirkabschnitt vorzusehen.

Je Speiche 3 sind zwei Verbindungsabschnitte 48a und 48b vorgesehen. Jeder Speiche 3 sind somit zwei Verbindungsabschnitte 48a und 48b zugeordnet. Jede Speiche 3; 3a ist im befestigten Zustand des Laufrades 1 durch die beiden Verbindungsabschnitten 48a und 48b fest mit der Felge 2, nämlich den Außenflanken 6a und 6b, verbunden. Die beiden Verbindungsabschnitte 48a und 48b sind an jeweils einer Außenflanke 6; 6a; 6b angebracht / angeklebt. Der erste Verbindungsabschnitt 48a ist an der ersten Außenflanke 6a angeklebt, während der zweite Verbindungsabschnitt 48b an der zweiten Außenflanke 6b angeklebt ist. Die im Wesentlichen schalenförmig verlaufenden Verbindungsabschnitte 48a und 48b sind somit im verklebten Zustand an der Felge 2 befestigt und bilden wiederum Außenseiten / Seitenflanken / Radseiten des Laufrades 1 mit aus.

Die Verbindungsabschnitte 48a und 48b sind in radialer Richtung gleich dimensioniert. Sie besitzen somit in radialer Richtung eine gleiche Länge. Von den Außenflanken 6a und 6b aus, an denen sie flächig anliegen, erstrecken sich die Verbindungsabschnitte 48a und 48b soweit in radialer Richtung nach innen, dass sie auf einer radialen Innenseite der Felge 2 radial nach innen abstehen. Insbesondere stehen sie im Bereich des Felgenbodens 21 von der Felge 2 ab. Dort bilden sie einen mittigen, d. h. in der Ebene des Felgenbodens 21 befindlichen Befestigungsbereich / Anschlussbereich für die Speiche 3a. Die Verbindungsabschnitte 48a und 48b sind mit der wiederum zentrisch zu der Felge 2, d. h. im Wesentlichen mittig zum Felgenboden 21 ausgerichteten Speiche 3a verbunden. Die Speiche 3a erstreckt sich in radialer Richtung in einen gebildeten (axialen) Zwischenraum zwischen den beiden Verbindungsabschnitten 48a und 48b hinein. Zur Befestigung der Speiche 3a überlappen / überragen die beiden Verbindungsabschnitte 48a und 48b sich gegenseitig sowie die Speiche 3a in radialer Richtung. Im befestigten Zustand ist die Speiche 3a in Richtung der ersten Außenflanke 6a mit dem ersten Verbindungsabschnitt 48a und in Richtung der zweiten Außenflanke mit dem zweiten Verbindungsabschnitt 48b verklebt. Somit ist die Speiche 3a im befestigten Zustand axial, in Bezug auf das Laufrad 1 gesehen, zwischen den Verbindungsabschnitten 48a und 48b angeordnet.

Wie zudem in Fig. 14 zu erkennen, ist die Speiche 3a radial nach innen beabstandet von dem Felgenboden / der Felge 2 angebracht. Das Ende 38 weist stets einen radialen Spalt / Abstand zu dem Felgenboden 21 / der Felge 2 auf. Dieser durch den Abstand gebildete Leerraum dient zum Einstellen der Lage der Speiche 3a relativ zur Felge 2, so dass insbesondere auch variierende Speichenlängen kompensiert werden können.

Des Weiteren sei darauf verwiesen, auch wenn dies in Fig. 14 der Übersichtlichkeit halber nicht dargestellt ist, dass die Speiche 3a an ihrem Ende 38 bevorzugt wiederum den Befestigungsbereich 5 in Form des aufgefächerten Faserverbundwerkstoffabschnitts 30 aufweist. Des Weiteren ist die Speiche 3a gesamtheitlich aus einem Faserverbundwerkstoff hergestellt. Auch die Außenflanken 6a und 6b sind wiederum mit einer Faserlage 13 hergestellt, so dass hierdurch eine vollkommene Faserverbundverklebung/-verbindung zwischen Felge 2 und Speiche 3a über die Verbindungsabschnitte 48a und 48b umgesetzt ist.

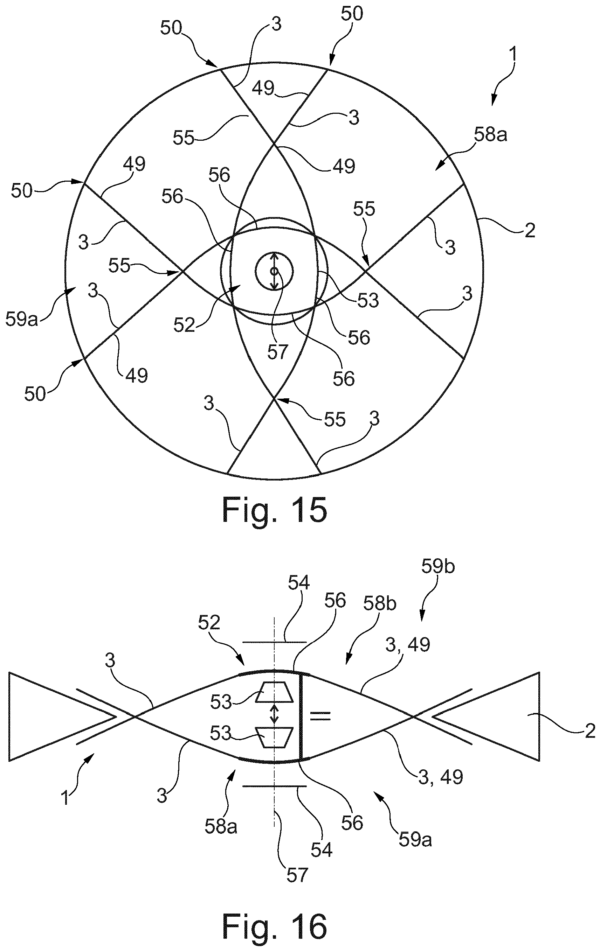

In Verbindung mit den Fign. 15 und 16 ist ein weiterer, zweiter Nebenaspekt der Erfindung veranschaulicht. Insbesondere ist in diesem Zusammenhang ein Herstellverfahren des Laufrades 1 gemäß diesem zweiten Nebenaspekt dargestellt. Das Laufrad 1 in den Fig. 15 und 16 entspricht im Aufbau dem Laufrad 1 des ersten Ausführungsbeispiels nach den Fign. 1 bis 13. Alternativ ist es jedoch auch in weiteren Ausführungen des Herstellverfahrens umgesetzt, das Laufrad 1 des zweiten Ausführungsbeispiels gemäß Fig. 14 herzustellen.

Nach dem erfindungsgemäßen Herstellverfahren des zweiten Nebenaspektes wird zunächst (in einem Schritt a)) die Felge 2 des Laufrades 1 bereitgestellt / angefertigt. Die Felge 2 weist in ihrem fertig ausgebildeten Zustand, wie er in den Fig. 15 und 16 umgesetzt ist, den Kern 14 sowie die den Kern 14 umgebende, bereits vollständig ausgehärtete Faserlage 13 auf.

Im Anschluss daran, in einem Schritt b), werden die Speichen 3 an der Felge 2 angeklebt. Die jeweiligen Speichen 3 sind Bestandteil eines Verbundstabes 49. Dieser Verbundstab 49 besteht vollständig aus Faserverbundwerkstoff. Insbesondere ist der Verbundstab 49 so angeordnet, dass er zwei Speichen 3 ausbildet. Jeweils eine Speiche 3 samt ihres Stegbereiches 17 sowie ihres Befestigungsbereiches 5 ist durch einen sich von einem Mittenbereich 56 des Verbundstabes 49 hin zu dem Ende 38 weg erstreckenden Abschnitt des Verbundstabes 49 ausgebildet. Der Verbundstab 49 verläuft insbesondere in seinem Mittenbereich 56 gebogen, wobei dieser Mittenbereich 56 im Weiteren mit der Nabe 4 verbunden wird.

Insbesondere wird in dem Verfahrensschritt b) jede Speiche 3 mit ihrem aufgefächerten sowie plattgedrückten Befestigungsbereich 5 mittels einer ersten Verklebung 50 an der jeweiligen Außenflanke 6a bzw. 6b der Felge 2 angeklebt.

Die Verbundstäbe 49 und somit die Speichen 3 sind in diesem Ausführungsbeispiel bereits vor dem Anbringen / Ankleben an der Felge 2 vollständig ausgehärtet. Alternativ hierzu ist es jedoch auch möglich, jeden Verbundstab 49 zuvor noch nicht vollständig aushärten zu lassen, sondern zumindest abschnittsweise als vorimprägnierten, noch feuchten Verbundstab 49 auszuführen, welcher Verbundstab 49 dann, etwa nach Ausrichten der Speiche 3 an der Felge 2, erst vollständig ausgehärtet wird.

Die die Speichen 3 ausbildenden Verbundstäbe 49 werden in dem Schritt b) gleichzeitig derart relativ zueinander angeordnet, dass sie mit ihren Mittenbereichen 56 gesamtheitlich eine zentrale, durchgängige Öffnung 52 ausbilden. In der Vorderansicht gemäß Fig. 15 betrachtet, ist die Öffnung 52 als eine Durchgangsöffnung ausgeführt, die sich in Längsrichtung des Laufrades 1 durchgängig zwischen den Mittenbereichen 56 der Verbundstäbe 49 / den Speichen 3 hindurcherstreckt. Die Öffnung 52 ist koaxial zu einer späteren Drehachse 57 des Laufrades 2 ausgerichtet.

Die jeweiligen Speichen 3 werden insbesondere durch Verbundstäbe 49 umgesetzt, die eine im Wesentlichen einheitliche Länge aufweisen. Jeder Verbundstab 49, unter Ausbildung zweier Speichen 3, kann beispielsweise 60 cm lang sein. Insbesondere sind Längen zwischen 50 cm und 70 cm bevorzugt.

Im Kreuzungsbereich 55 zweier einander kreuzender Speichen 3 weist die jeweilige Speiche 3 bzw. der jeweilige Verbundstab 49 einen (optionalen) Ebenenversatz auf. Beispielsweise erstreckt sich zumindest eine der beiden sich kreuzenden Speichen 3 derart zu der sie kreuzenden Speiche 3, dass die beiden Speichen 3 in dem Kreuzungsbereich 55 in axialer Richtung beabstandet zueinander angeordnet sind. Ein solcher Ebenenversatz kann beispielsweise durch eine s- / z-förmige Erstreckung des jeweiligen Verbundstabes 49 / der Speiche 3 im Kreuzungsbereich 55 realisiert sein.

In einem Verfahrensschritt c) wird die erste Verklebung 50 jeder Speiche 3 ausgehärtet ist, so dass die Speichen 3 fest mit der Felge 2 verbunden sind. Mittels der ersten Verklebung 50 wird jede Speiche 3 an der jeweiligen Außenflanke 6a, 6b der Felge 2 exakt befestigt.

Im Anschluss an den Verfahrensschritt c) kommt es zu einem nachfolgend näher Beschriebenen Spannen der Verbundstäbe 49 bzw. Speichen 3 in axialer Richtung sowie in radialer Richtung des Laufrades 1.

In einem Verfahrensschritt d) wird jede Speiche 3 an einer Nabe 4 fixiert. Für dieses Fixieren dient insbesondere eine zweite Verklebung.

Vor dem Vorfixieren, d.h. vor dem Schritt d) und nach dem Schritt c), werden die Speichen 3 mittels zweier Spannkörper 53 in axialer sowie in radialer Richtung (der Drehachse 57) relativ zueinander vorgespannt / unter Vorspannung auseinandergetrieben. Wie in Fig. 15 prinzipiell zu erkennen, wird je axialer Radseite 59a, 59b / Seite des Laufrades 1 ein Spannkörper 53 verwendet, der an die die jeweilige Radseite 59a, 59b ausbildenden Speichen 3 angelegt wird.

In Verbindung mit Fig. 16 ist zu erkennen, dass ein Spannkörper 53 mit einer eine erste (axiale) Radseite 59a (zumindest teilweise) ausbildenden ersten Speichengruppe 58a zusammenwirkt und ein anderer Spannkörper 53 mit einer eine zweite (axiale) Radseite 59b (zumindest teilweise) ausbildenden zweiten Speichengruppe 58b zusammenwirkt. Die Spannkörper 53 sind jeweils als (kegelförmiger) Keil ausgebildet, können jedoch auch als Platte ausgebildet sein. Ein erster Durchmesser einer keglig verlaufenden Außenfläche des Spannkörpers 53 ist kleiner als ein minimaler radialer Abstand der Öffnung 52 in einem unbelasteten Zustand der Speichen 3. Von der diesen ersten Durchmesser aufweisenden Stelle der Außenfläche aus erweitert sich der Spannkörper 53 in seiner axialen Richtung konisch bis zu einer einen zweiten Durchmesser aufweisenden weiteren Stelle der Außenfläche hin. Dieser zweite Durchmesser ist schließlich deutlich größer ausgeführt als ein maximaler radialer Abstand der Öffnung 52 in dem unbelasteten Zustand der Speichen 3.

Durch die Öffnung 52 im Bereich der ersten axialen Radseite 59a wird somit ein erster Spannkörper 53 durch die Speichen 3 bzw. die Verbundstäbe 49 eingeschoben, wohingegen auf einer der ersten axialen Radseite 59a entgegengesetzten zweiten axialen Radseite 59b ein zweiter Spannkörper 53 durch die dort angeordneten Speichen 3 bzw. Verbundstäbe 49 eingeschoben wird. Beide Spannkörper 53 werden in axialer Richtung voneinander weggeschoben und spannen die Speichen 3 sowohl in axialer Richtung als auch in radialer Richtung des Laufrades 1 / der Drehachse 57 vor.

In Fig. 16 ist auch gut zu erkennen, dass je Radseite 59a, 59b eine Ebenenblockadeeinrichtung 54 in Form eines axialen Anschlags 54 als Begrenzung der maximalen Dehnung der Speichen 3 in axialer Richtung vorhanden sind. Bei einem maximal gewollten Auseinandertreiben der Speichen 3 in axialer Richtung liegen die jeweiligen Speichen 3 / Spannkörper 53 der jeweiligen axialen Radseite 59a, 59b an dieser Ebenenblockadeeinrichtung 54 / diesem Anschlag 54 an. Bei Anlage an dem Anschlag 54 wird dann noch weiter der radiale Abstand der Speichen 3 relativ zu der gedachten Drehachse 57 eingestellt. Hierbei können die einzelnen Speichen 3 bei Anlage im Endanschlag 54 jeweils unabhängig voneinander noch weiter in radialer Richtung nach außen oder nach innen getrieben werden. Bei Verwendung einer Platte als Spannkörper 53 findet zunächst lediglich ein axiales Vorspannen der Speichen 3 statt und erst im Anschluss, nach Erreichen der beabsichtigten axialen Position der Speichen 3 ein Verschieben der Speichen 3 in die gewünschte radiale Position.

Nachdem die gewünschte Lage / Ausrichtung der Speichen 3 bzw. der Verbundstäbe 49 umgesetzt ist und die jeweiligen Speichen 3 ausreichend auf Zug belastet sind, wird in Verfahrensschritt d) ein hier der Übersichtlichkeit halber nicht weiter dargestellter Nabenanbringbereich, der die Nabe 4 ausbildet, eingesetzt und zwischen den beiden Speichengruppen 58a, 58b eingespannt. In einem axialen Zwischenraum zwischen den die jeweilige Radseite 59a, 59b ausbildenden Bereichen der Speichengruppen 58a, 58b, im Bereich der Öffnung 52, werden die Nabenanbringbereiche, vorzugsweise in Form von rohr- / hülsenförmigen Beabstandungselementen, eingespannt. Die Speichen 3 werden in diesem Verfahrensschritt d) schließlich jeweils mittels der zweiten Verklebung 51 an der Nabe 4 / dem Nabenanbringbereich befestigt / vorfixiert. In einem weiteren Schritt e) werden die zweiten Verklebungen 51 allesamt vollständig ausgehärtet, sodass die auf Zug belasteten Speichen 3 vollständig an der Nabe 4 befestigt sind. Somit wird jede Speiche 3 im Bereich der Nabe 4 exakt vorgespannt und in der jeweils geeigneten vorbespannten Stellung letztendlich an der Nabe 4 mittels der zweiten Verklebung 51 dauerhaft befestigt. Dadurch wird ein besonders effektives Herstellverfahren des Laufrades 1 umgesetzt.

Hierbei sei darauf hingewiesen, dass die Verwendung der Ebenenblockadeeinrichtungen 54 nicht zwingend, sondern lediglich optional anzusehen ist, so dass das erfindungsgemäße Verfahren auch ohne die verwendeten Ebenenblockadeeinrichtungen 54 durchführbar ist.

Auch sei darauf hingewiesen, dass es auch möglich ist, die beiden Radseiten 59a, 59b, anders wie in den in den Fign. 15 und 16 umgesetzt, nicht gleichzeitig, sondern nacheinander anzufertigen. Dies bedeutet, dass die beiden axialen Radseiten 59a, 59b dann unabhängig voneinander angefertigt werden können. Beispielsweise ist es prinzipiell möglich, zuerst die die erste Radseite 59a, 59b mit ausbildende erste Speichengruppe 58a, unter vollständigem Aushärten der ersten Verklebung und/oder der zweiten Verklebung, an der Felge 2 sowie an dem Nabenanbringbereich / der Nabe 4 zu befestigen, wonach dann erst die die zweite Radseite 59a, 59b mit ausbildende zweite Speichengruppe 58b entsprechend ausgebildet wird und an Felge 2 und Nabe 4 befestigt wird.

### Bezugszeichenliste

- 1: Laufrad
- 2: Felge
- 3: Speiche
- 3a: erste Speiche
- 3b: zweite Speiche
- 4: Nabe
- 5: Befestigungsbereich
- 6: Außenflanke
- 6a: erste Außenflanke
- 6b: zweite Außenflanke
- 7: Abdeckabschnitt
- 8: erste Klebefläche
- 9: zweite Klebefläche
- 10: Innenfläche
- 11: Vertiefung
- 12: Ausnehmung
- 13: Faserlage
- 14: Kern
- 15: Verbindungsbereich
- 16: Durchgangsloch
- 17: Stegbereich
- 18: Anlagebereich
- 19: erste Außenkontur
- 20: zweite Außenkontur
- 21: Felgenboden
- 22: erste Seitenflanke des Kerns
- 23: zweite Seitenflanke des Kerns
- 24: Felgenbett
- 25: Felgenbettverstärkung
- 26: erstes Felgenhorn
- 27: zweites Felgenhorn
- 28: Felgenhöhe
- 29: Felgenbreite
- 30: Faserverbundwerkstoffabschnitt
- 31: erster Ausnehmungsbereich
- 32: zweiter Ausnehmungsbereich
- 33a: erster Vertiefungsgrund
- 33b: zweiter Vertiefungsgrund
- 34: Bremsenauflage
- 35: erster Vertiefungsbereich
- 36: zweiter Vertiefungsbereich
- 37: Außenseite
- 38: Ende
- 39: dritte Klebefläche
- 40: vierte Klebefläche
- 41: fünfte Klebefläche
- 42: sechste Klebefläche
- 43: Klebeschichtdicke
- 44: Länge des Befestigungsbereiches
- 45: Länge des ersten Vertiefungsbereiches
- 46: Breite des Befestigungsbereiches
- 47: Breite des ersten Vertiefungsbereiches
- 48a: erster Verbindungsabschnitt
- 48b: zweiter Verbindungsabschnitt
- 49: Verbundstab
- 50: erste Verklebung
- 52: Öffnung
- 53: Spannkörper
- 54: Ebenenblockadeeinrichtung
- 55: Kreuzungsbereich
- 56: Mittenbereich
- 57: Drehachse
- 58a: erste Speichengruppe
- 58b: zweite Speichengruppe
- 59a: erste Radseite
- 59b: zweite Radseite

## Patentansprüche

1. Laufrad (1) für ein muskelbetriebenes Fahrzeug, mit einer zumindest teilweise aus einem Faserverbundwerkstoff bestehenden Felge (2) sowie mit mehreren Speichen (3), die die Felge (2) mit einer Nabe (4) verbinden, wobei jede Speiche (3) mit einem aus einem Faserverbundwerkstoff bestehenden Befestigungsbereich (5) an einem Faserverbundabschnitt einer Außenflanke (6) der Felge (2) angeklebt ist und von einer der Außenflanke (6) abgewandten Seite wiederum durch einen der jeweiligen Speiche (3) zugeordneten Abdeckabschnitt (7), der der wiederum an dem Befestigungsbereich (5) sowie der Außenflanke (6) angeklebt ist, abgedeckt ist, **dadurch gekennzeichnet, dass** ein Verhältnis von einer ersten Klebefläche (8), mit der der Befestigungsbereich (5) an der Außenflanke (6) angebracht ist, zu einer zweiten Klebefläche (9), mit der der Abdeckabschnitt (7) an der Außenflanke (6) angebracht ist, zwischen 0,1 und 0,4 liegt.

2. Laufrad (1) nach Anspruch 1, **dadurch gekennzeichnet, dass** das Verhältnis von der ersten Klebefläche (8) zu der zweiten Klebefläche (9) zwischen 0,2 und 0,25 liegt.

3. Laufrad (1) nach Anspruch 1 oder 2, **dadurch gekennzeichnet, dass** die erste Klebefläche (8) eine Größe zwischen 100 mm² und 300 mm² aufweist.

4. Laufrad (1) nach einem der Ansprüche 1 bis 3, **dadurch gekennzeichnet, dass** die zweite Klebefläche (9) eine Größe zwischen 400 mm² und 800 mm² aufweist.

5. Laufrad (1) nach Anspruch 1, **dadurch gekennzeichnet, dass** der Abdeckabschnitt (7) aus einem faserverstärkten Verbundmaterial hergestellt ist.

6. Laufrad (1) nach Anspruch 1 oder 2, **dadurch gekennzeichnet, dass** der Abdeckabschnitt (7) scheibenartig ausgeformt ist und eine Innenfläche (10) ausbildet, die gesamtheitlich eine Größe zwischen 600 mm² und 1000 mm² aufweist.

7. Laufrad (1) nach einem der Ansprüche 1 bis 6, **dadurch gekennzeichnet, dass** der Befestigungsbereich (5) mit seiner ersten Klebefläche (8) flächig in einer Vertiefung (11) in der Außenflanke (6) anliegt.

8. Laufrad (1) nach Anspruch 7, **dadurch gekennzeichnet, dass** der Abdeckabschnitt (7) mit seiner zweiten Klebefläche (9) um den gesamten Befestigungsbereich (5) herum flächig in der Vertiefung (11) anliegt.

9. Laufrad (1) nach einem der Ansprüche 1 bis 8, **dadurch gekennzeichnet, dass** die erste Klebefläche (8) und/oder die zweite Klebefläche (9) mit einer Verklebung an der Außenflanke (6) angebracht sind/ist, die eine Dicke zwischen 0,08 mm und 0,22 mm aufweist.

10. Fahrrad mit einem Laufrad (1) nach einem der Ansprüche 1 bis 9.

## Claims

1. Wheel (1) for a muscle-driven vehicle, having a rim (2) consisting at least partially of a fibre composite material and having a plurality of spokes (3) which connect the rim (2) to a hub (4), wherein each spoke (3) is bonded with its fixing region (5) consisting of a fibre composite material to a fibre composite portion of an outer face (6) of the rim (2) and is in turn covered on a side facing away from the outer face (6) by means of a cover portion (7) assigned to the respective spoke (3), wherein the cover portion in turn is bonded to the fixing region (5) as well as to the outer face (6), **characterized in that** a ratio of a first bond-surface (8) with which the fixing region (5) is attached to the outer face (6), to a second bond-surface (9) with which the cover portion (7) is attached to the outer face (6), is between 0.1 and 0.4.

2. Wheel (1) according to claim 1, **characterized in that** the ratio of the first bond-surface (8) to the second bond-surface (9) is between 0.2 and 0.25.

3. Wheel (1) according to claim 1 or 2, **characterized in that** the first bond-surface (8) has a size between 100 mm² and 300 mm².

4. Wheel (1) according to one of claims 1 to 3, **characterized in that** the second bond-surface (9) has a size between 400 mm² and 800 mm².

5. Wheel (1) according to claim 1, **characterized in that** the cover portion (7) is made from a fibre-reinforced composite material.

6. Wheel (1) according to claim 1 or 2, **characterized in that** the cover portion (7) is formed to be disc-shaped and forms an inner surface (10) which in total has a size between 600 mm² and 1000 mm².

7. Wheel (1) according to one of claims 1 to 6, **characterized in that** the fixing region (5) lies with its first bond-surface (8) planarly in a depression (11) in the outer face (6).

8. Wheel (1) according to claim 7, **characterized in that** the cover portion (7) lies with its second bond-surface (9) planarly around the entire fixing region (5) in the depression (11).

9. Wheel (1) according to one of claims 1 to 8, **characterized in that** the first bond-surface (8) and/or the second bond-surface (9) are/is attached with a bond to the outer face (6), wherein the bond has a thickness between 0.08 mm and 0.22 mm.

10. Bicycle having a wheel (1) according to one of claims 1 to 9.

## Revendications

1. Roue de roulement (1) pour un véhicule à entraînement musculaire, avec une jante (2) consistant au moins partiellement en un matériau composite en fibres ainsi qu'avec plusieurs rayons (3) qui relient la jante (2) à un moyeu (4), dans laquelle chaque rayon (3) est collé au moyen d'une zone de fixation (5) consistant en un matériau composite en fibres à une partie en composite en fibres d'un flanc extérieur (6) de la jante (2) et, depuis un côté éloigné du flanc extérieur (6), à son tour au moyen d'une partie de recouvrement (7) associée au rayon (3) respectif qui est à son tour collée à la zone de fixation (5) ainsi qu'au flanc extérieur (6), **caractérisée en ce qu'**un rapport entre une première surface de collage (8), au moyen de laquelle la zone de fixation (5) est fixée au flanc extérieur (6), et une seconde surface de collage (9), au moyen de laquelle la partie de recouvrement (7) est apposée au flanc extérieur (6), se trouve entre 0,1 et 0,4.

2. Roue de roulement (1) selon la revendication 1, **caractérisée en ce qu'**un rapport entre la première surface de collage (8) et la seconde surface de collage (9) se trouve entre 0,2 et 0,25.

3. Roue de roulement (1) selon la revendication 1 ou 2, **caractérisée en ce que** la première surface de collage (8) présente une taille entre 100 mm² et 300 mm².

4. Roue de roulement (1) selon l'une quelconque des revendications 1 à 3, **caractérisée en ce que** la seconde surface de collage (9) présente une taille entre 400 mm² et 800 mm².

5. Roue de roulement (1) selon la revendication 1, **caractérisée en ce que** la partie de recouvrement (7) est fabriquée à partir d'un matériau composite renforcé de fibres.

6. Roue de roulement (1) selon la revendication 1 ou 2, **caractérisée en ce que** la partie de recouvrement (7) est sculptée en forme de disque et forme une surface intérieure (10) qui présente dans l'ensemble une taille entre 600 mm² et 1 000 mm².

7. Roue de roulement (1) selon l'une quelconque des revendications 1 à 6, **caractérisée en ce que** la zone de fixation (5) s'appuie avec sa première surface de collage (8) de manière plane dans une dépression (11) dans le flanc extérieur (6).

8. Roue de roulement (1) selon la revendication 7, **caractérisée en ce que** la partie de recouvrement (7) s'appuie avec sa seconde surface de collage (9) de manière plane dans l'évidement (11) autour de toute la zone de fixation (5).

9. Roue de roulement (1) selon l'une quelconque des revendications 1 à 8, **caractérisée en ce que** la première surface de collage (8) et/ou la seconde surface de collage (9) sont apposées avec un collage sur le flanc extérieur (6), qui présente une épaisseur entre 0,08 mm et 0,22 mm.

10. Vélo avec une roue de roulement (1) selon l'une quelconque des revendications 1 à 9.
